# EUROPÄISCHE PATENTSCHRIFT

(11) **EP 2 180 190 B1**
(45) Veröffentlichungstag und Bekanntmachung des Hinweises auf die Patenterteilung: **22.03.2017**
(21) Anmeldenummer: 09013041.0
(22) Anmeldetag: 15.10.2009
(51) Int. Cl.: B01D 19/00, F04D 9/00, F04D 13/06, F04D 29/40, F04D 29/60, F04D 29/62, F16K 24/04

(54) **Pumpengehäuse**
Pump casing
Boîtier de pompe

(30) Priorität: 23.10.2008 DE 102008052884
(43) Veröffentlichungstag der Anmeldung: 28.04.2010
(73) Patentinhaber: WILO SE, 44263 Dortmund (DE)
(72) Erfinder: Le Strat, Olivier, 18700 Oizon (FR); Marechal, Patrick, 18410 Argent sur Sauldre (FR); Meugnier, Virginie, 18220 Parassy (FR)
(74) Vertreter: Cohausz Hannig Borkowski Wißgott

(56) Entgegenhaltungen:
- EP-A1- 1 055 826
- EP-A1- 1 873 399
- DE-A1- 1 653 725
- DE-A1- 2 346 286
- DE-A1- 3 022 420
- DE-A1- 3 813 654
- DE-U1- 20 219 186
- DE-U1- 29 718 285
- FR-A1- 2 405 083
- US-A- 3 290 864
- US-A- 4 447 189

## Beschreibung

Die Erfindung betrifft ein Pumpengehäuse für eine elektromotorisch betriebene Pumpe, mit einer Luftabscheidekammer, durch welche im Betrieb der Pumpe eine zu fördernde Flüssigkeit gesaugt und in welcher in der Flüssigkeit enthaltene Luft abgeschieden wird, wobei die Luftabscheidekammer eine Einlassöffnung aufweist, an die sich ein Kanal anschließt, durch den die Flüssigkeit im Betrieb der Pumpe in die Luftabscheidekammer gesaugt wird, und mit einer Entlüftungskammer, die mit der Luftabscheidekammer zum Einbringen der abgeschiedenen Luft in die Entlüftungskammer in Verbindung steht, wobei sich die Entlüftungskammer seitlich an die Luftabscheidekammer anschließt, und wobei die Entlüftungskammer an einem oberseitigen Ende eine Öffnung zur Abgabe der Luft nach außen aufweist.

Derartige Pumpengehäuse sind bekannt und werden insbesondere bei Heizungspumpen eingesetzt, die als Kompaktaggregat ausgeführt sind. So offenbart beispielsweise die europäische Patentanmeldung EP 1873399 A1 ein gattungsgemäßes Pumpengehäuse, bei dem die Entlüftungskammer einen festen Boden aufweist und in den oberen Bereich der Luftabscheidekammer hin offen ist.

Die Flüssigkeit wird über einen Saugstutzen am tiefsten Punkt der Luftabscheidekammer in diese hinein gesaugt.

Aus der deutschen Offenlegungsschrift DE 30 22 420 A1 ist ein Einsatz bekannt, der einen Boden der Entlüftungskammer bildet. Dieser Einsatz ist auf der einer Zuströmung in die Luftabscheidekammer abgewandten Seite angeordnet. Bei der Gebrauchsmusterschrift DE 202 19 186 U1 werden ein Filter und eine Saugscheibe in axialer Richtung in ein Pumpengehäuse eingesetzt, Ein Filtereinsatz 32 mitsamt einer einstückig mit dem Pumpengehäuse verbundenen Wand des Entgasers sorgen dafür, dass Luft in den Entgaser abgeschieden wird. Weitere Pumpengehäuse sind aus den Schriften DE 23 46 286 A1, DE 279 18 285 U1 und DE 38 13 654 A1 bekannt.

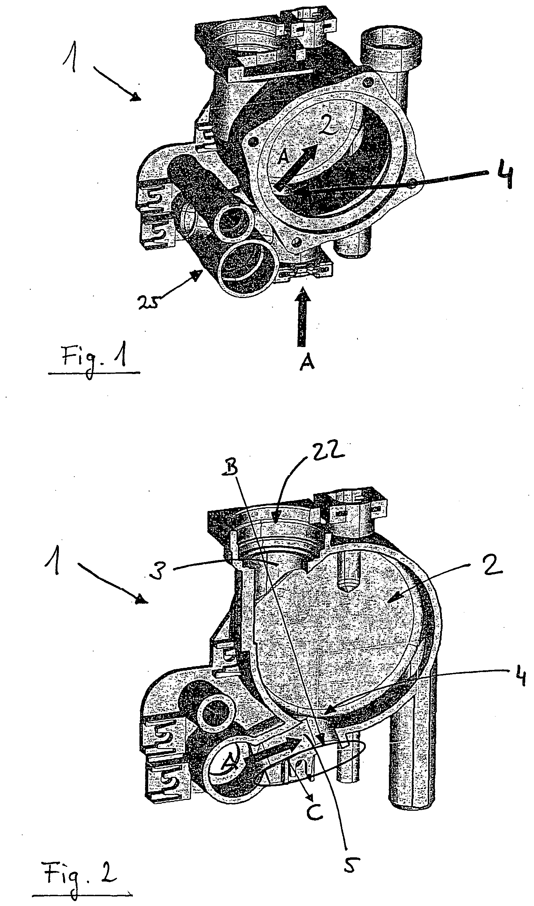

Ein gattungsgemäßes Pumpengehäuse ist ferner in den Figuren 1 und 2 dargestellt. Über einen Flansch wird das Pumpengehäuse mit einem Elektromotor verbunden, so dass sich innerhalb der Pumpenkammer ein auf der Motorwelle montiertes Laufrad dreht. In axialer Richtung vor der Pumpenkammer ist eine Luftabscheidekammer vorhanden, die durch eine scheibenförmige Trennwand von der Pumpenkammer getrennt ist. Die Trennwand weist eine zentrale Saugöffnung auf, die auf den Saugmund des Laufrades gerichtet ist. Im Betrieb der Pumpe saugt das Laufrad über die Saugöffnung eine zu fördernde Flüssigkeit durch die Luftabscheidekammer an.

Die Luftabscheidekammer weist eine bodenseitig angeordnete Einlassöffnung auf, durch die die Flüssigkeit in die Luftabscheidekammer eintreten kann. Dies ist in den Figuren 1 und 2 mit den mit A gekennzeichneten Pfeilen dargestellt. Mittels Flüssigkeitsführungselementen wird die einströmende Flüssigkeit in eine teilzirkulare Strömung in Richtung der Saugöffnung umgelenkt. An die Einlassöffnung schließt sich ein Kanal an, durch den die Flüssigkeit in die Luftabscheidekammer gesaugt wird. Der Kanal respektive die Einlassöffnung sind zur Reduzierung von hydraulischen Widerständen tangential zur Luftabscheidekammer angeordnet. Auf diese Weise kann die Flüssigkeit tangential in die Luftabscheidekammer einströmen und wird durch die Flüssigkeitsführungselemente und die äußere Kammerwand der Luftabscheidekammer in Umfangsrichtung gelenkt. Im oberen Bereich der Luftabscheidekammer wird die in der Flüssigkeit mitgeführte Luft abgeschieden.

In Richtung der Laufradachse gesehen seitlich schließt sich eine Entlüftungskammer an die Luftabscheidekammer an. Die Luftabscheidekammer ist im Wesentlichen zylindrisch ausgebildet und wird von einer Kammerwand begrenzt, die die Entlüftungskammer von der Luftabscheidekammer trennt. In dieser Kammerwand ist eine Durchlassöffnung vorgesehen, die die Entlüftungskammer mit dem oberen Bereich der Luftabscheidekammer verbindet. Durch diesen Durchlass wird die im oberen Teil der Luftabscheidekammer abgeschiedene Luft aufgrund der in Umfangsrichtung nachströmenden Flüssigkeit in die Entlüftungskammer gedrückt. Die Entlüftungskammer ist als Hohlzylinder ausgebildet und weist an ihrem oberen Ende eine Öffnung auf, durch die die Luft wiederum an die Umgebung des Pumpengehäuses abgegeben wird.

Ein erheblicher Nachteil von Pumpengehäusen der beschriebenen Bauart ist deren Herstellungsverfahren. Üblicherweise werden Pumpengehäuse als Formteil durch ein Spritzguss- oder Spritzpressverfahren, insbesondere aus einem thermoplastischen Kunststoff hergestellt. Hierbei ist es notwendig entsprechende Gussformen anzufertigen. Zur Ausbildung des Kanals, der innerhalb des Pumpengehäuses eine Art Rohrstück darstellt, ist es erforderlich, einen Kern in Gestalt eines massiven Zylinders zu verwenden, um den die Spritzgussmasse herum gespritzt wird. Es stellt sich jedoch das Problem, den Kern aus der Umspritzung zu entfernen. Dieses Problem ist nach dem Stand der Technik derart gelöst, dass der Kern nicht vollständig umspritzt wird. Der Kern ist dabei derart ausgebildet, dass der massive Zylinder in einer zur Zylinderachse senkrechten Achse verlängert ist. In Richtung dieser Achse, die in Figur 2 durch einen Pfeil C gekennzeichnet ist, kann der Kern nach dem Spritzgussverfahren durch eine in dem Formteil verbleibenden Öffnung entfernt werden. Hieraus resultiert jedoch wiederum der Nachteil, dass in dem mit B in Figur 2 gekennzeichneten Bereich die besagte Öffnung in der Gehäusewandung des Kanals verbleibt. Dies muss durch einen Stöpsel nachträglich verschlossen werden. Weiterhin stellt die Entformung des Kerns einen zusätzlichen Verfahrensschritt dar, der manuell durchgeführt werden muss. Auch ergibt sich durch die Notwendigkeit eines Stöpsels die Gefahr einer Leckage für den Fall, dass der Stöpsel die Öffnung nicht dichtend verschließt. Schließlich ergibt sich auch die Gefahr, dass der Stöpsel aufgrund von Alterungserscheinungen seine dichtende Wirkung verliert. Ferner ist auch das Aufsetzen des Stöpsels ein zusätzlicher Verfahrensschritt, der zeitaufwendig ist und manuell durchgeführt werden muss. Das Herstellungsverfahren sowie das Pumpengehäuse als solches nach dem Stand der Technik ist folglich mit erheblichen Nachteilen verbunden.

Es ist daher Aufgabe der Erfindung, ein betriebssicheres Pumpengehäuse bereit zu stellen, dass auf einfache Art hergestellt werden kann und keine Öffnung für die notwendige Entformung eines Kerns aufweist, die durch eine Stöpsel verschlossen werden muss. Weiterhin ist es Aufgabe der Erfindung ein einfaches Verfahren zur Herstellung des Pumpengehäuses bereitzustellen, durch die Notwendigkeit von Entformungsöffnungen innerhalb des Pumpengehäuses vermeidet.

Diese Aufgabe wird durch ein Pumpengehäuse mit den Merkmalen des Anspruchs 1 sowie durch ein Verfahren nach Anspruch 13 gelöst. Vorteilhafte Weiterbildungen der Erfindung sind in den weiteren Ansprüchen aufgeführt.

Erfindungsgemäß wird ein Pumpengehäuse mit den Merkmalen des Oberbegriffs des Anspruchs 1 vorgeschlagen, bei dem die Entlüftungskammer an einem unterseitigen Ende zu dem Kanal hin offen ausgebildet ist, wobei durch die Öffnung ein Einsatz in die Entlüftungskammer derart eingebracht ist, dass der Einsatz im eingesetzten Zustand einen Boden der Entlüftungskammer bildet, der die Entlüftungskammer zum Kanal hin abgrenzt.

Der Erfindung liegt folglich die konstruktive Idee zu Grunde, den die Entlüftungskammer bildenden Hohlraum bis in den unterhalb der Entlüftungskammer liegenden Kanal zu verlängern. Dies ermöglicht, dass der zur Ausbildung des Kanals notwendige Kern einstückig oder formschlüssig mit dem zur Ausbildung der Entlüftungskammer notwendigen Kern ausgebildet werden kann und gemeinsam mit diesem durch die oberseitige Öffnung der Entlüftungskammer entfernt werden kann. Eine zusätzliche Öffnung zur Entformung des zur Ausbildung des Kanals notwendigen Kerns kann dadurch entfallen. Die Gefahr einer Leckage aufgrund eines undichten, die Entformungsöffnung verschließenden Stöpsels kann dadurch vermieden werden. Weiterhin vereinfacht und beschleunigt sich das Herstellungsverfahren des Pumpengehäuses, da der zur Entformung des Kerns notwendige Schritt sowie das Verschließen der Entformungsöffnung durch einen Stöpsel entfallen.

Da die Entlüftungskammer zum Kanal hin offen ausgebildeten ist, muss diese durch einen Boden verschlossen werden. Dies erfolgt durch den Einsatz, der durch die Öffnung der Entlüftungskammer in diese eingebracht ist, wobei der Einsatz im eingesetzten Zustand den Boden der Entlüftungskammer bildet, der die Entlüftungskammer zum Kanal hin abgrenzt. Dies bedeutet, dass die Unterseite des Einsatzes den Kanal nach oben begrenzt.

Erfindungsgemäß weist der Einsatz zumindest eine Öffnung auf, über die die Entlüftungskammer mit dem Kanal in Verbindung steht. Hierdurch wird ein Druckausgleich zwischen der Entlüftungskammer und dem Kanal gewährleistet.

Zur Fixierung des Einsatzes innerhalb der Entlüftungskammer kann diese an ihrer Kammerwand zumindest einen nach innen gerichteten Vorsprung aufweisen, gegen welchen sich der Einsatz im eingesetzten Zustand abstützt. Hiermit wird erreicht, dass der Einsatz an eine definierte Höhe innerhalb der Entlüftungskammer eingesetzt werden kann, so dass die Unterseite des Einsatzes eine obere Begrenzung des Kanals bildet.

In einer vorteilhaften Weiterbildung der Erfindung kann die Entlüftungskammer von einer Kammerwand begrenzt sein, die gleichzeitig eine Trennwand bildet, welche die Entlüftungskammer von der Luftabscheidekammer trennt, wobei die Trennwand ein unteres Ende aufweist, mit dem sie oberhalb der Einlassöffnung und damit auch oberhalb des Kanals endet. Vorzugsweise erstreckt sich die Trennwand mit ihrem unteren Ende maximal bis zur Höhe der vertikalen Mitte der Luftabscheidekammer. Hierdurch wird erreicht, dass zwischen dem unteren Ende der Trennwand und dem Boden des Kanals ein Abstand gebildet wird, der in einen die Einlassöffnung bildenden Teil und einen oberhalb der Einlassöffnung befindlichen Teil geteilt werden kann. Über den oberhalb der Einlassöffnung befindlichen Teil kann die Luftabscheidekammer dann mit der Entlüftungskammer in Verbindung stehen. Über diese Verbindung kann sich in der Entlüftungskammer ansammelnde Flüssigkeit in die Luftabscheidekammer zurückgeführt werden.

Vorzugsweise kann vorgesehen sein, dass der Vorsprung am unteren Ende der Trennwand angeordnet ist und sich zumindest teilweise am Innenumfang der Entlüftungskammer erstreckt. Hierdurch wird die Stabilität der Trennwand erhöht.

Die Öffnung des Einsatzes kann im Querschnitt halbzylindrisch ausgebildet sein. Damit wird erreicht, dass die Öffnung mit ihrem im Querschnitt runden Teil der Begrenzungsfläche an die Umfangsform des Einsatzes angepasst werden kann und der ebene Teil der Begrenzungsfläche nahe an den Durchmesser des Einsatzes herangebracht werden kann, wodurch die Öffnung innerhalb einer Hälfte des Einsatzes größtmöglich ausgeführt werden kann.

Innenseitig der Öffnung kann sich zumindest ein Vorsprung über zumindest einen Teil der vertikalen Erstreckung der Öffnung in die Öffnung hinein erstrecken. Hierdurch wird die Öffnung in vertikaler Richtung in zwei Bereiche geteilt, die miteinander in Verbindung stehen. Der Vorsprung bewirkt, dass Blasen von sich unterhalb des Einsatzes ansammelnden Schaum der Flüssigkeit durch die Öffnung nach oben geführt werden. Dieser Effekt wird dadurch verbessert, dass dem Vorsprung ein weiterer Vorsprung beabstandet gegenübersteht. Der Abstand kann hierbei klein gewählt werden, insbesondere maximal 1-2 mm betragen.

In einer vorteilhaften Weiterbildung des Einsatzes kann eine sich in Richtung der Öffnung der Entlüftungskammer erstreckende Begrenzungswand einen offenen Raum umschließen, der die Öffnung des Einsatzes in Richtung der Öffnung der Entlüftungskammer verlängert. Die vertikale Erstreckung der Öffnung des Einsatzes wird dadurch erhöht. In der Ausführungsvariante mit einem halbzylindrischen Querschnitt der Öffnung des Einsatzes ist die Begrenzungswand dann schnabelartig ausgeführt. Die Begrenzungswand bildet eine vulkanartige Erhöhung, wobei aus dem sie umschließenden Raum Blasen austreten können, die zum Boden des Einsatzes fließen. Hierdurch wird die Bewegungsstrecke für die Blasen erhöht, so dass die Blasen mehr Zeit haben, sich aufzulösen, und dabei eine verbesserte Trennung der Luft von der Flüssigkeit erreicht wird.

Weiterhin kann der Einsatz eine Durchlassöffnung aufweisen, über die die Entlüftungskammer mit der Luftabscheidekammer verbunden ist. Durch diese Durchlassöffnung kann sich in der Entlüftungskammer ansammelnde Flüssigkeit in die Luftabscheidekammer zurückgeführt werden. Im eingesetzten Zustand ist die Durchlassöffnung zur Luftabscheidekammer gerichtet, so dass die zurückfließende Flüssigkeit durch den oberen Teil des Abstandes zwischen dem unteren Ende der Trennwand und dem Kanalboden, d.h. oberhalb der Einlassöffnung in die Luftabscheidekammer eintreten kann.

Zur Ansammlung der Flüssigkeit innerhalb der Entlüftungskammer kann der Einsatz eine sich nach unten erstreckenden Vertiefung oder eine Ausnehmung aufweisen, wobei die Durchflussöffnung bodenseitig der Vertiefung oder der Ausnehmung angeordnet ist. Die Vertiefung oder die Ausnehmung kann im Querschnitt ebenfalls halbzylindrisch ausgebildet sein. In Kombination mit der halbzylindrischen Ausbildung der Öffnung kann dabei im Querschnitt betrachtet eine Hälfte des Einsatzes durch die Öffnung gebildet sein, die den Kanal mit der Entlüftungskammer verbindet, und die andere Hälfte durch die Ausnehmung bzw. Vertiefung gebildet sein. Der die Vertiefung bzw. Ausnehmung tragende Teil des Einsatzes kann dabei zur Luftabscheidekammer gerichtet sein, so dass die in der Entlüftungskammer respektive in der Ausnehmung bzw. Vertiefung sich ansammelnde Flüssigkeit in die Luftabscheidekammer zurückfließt.

In einer weiteren vorteilhaften Weiterbildung der Erfindung kann an der Unterseite des Einsatzes zwischen der Durchflussöffnung und der Öffnung eine Anlagefläche gebildet sein, an die eine Leitwand einer Saugscheibe formschlüssig ansetzbar ist. Hierdurch wird eine Trennung des Abstandes zwischen dem unteren Ende der Trennwand und dem unteren Boden des Kanals in einen oberen, die Rückführung der sich in der Entlüftungskammer ansammelnden Flüssigkeit ermöglichenden Teil, und einen die Einlassöffnung bildenden unteren Teil erreicht, wobei durch Ansetzen der Leitwand an den Einsatz unterhalb dieser Leitwand der Kanal, bzw. die Einlassöffnung ausgebildet wird und oberhalb der Leitwand zwischen dieser und dem unteren Ende der Trennwand eine Öffnung verbleibt, durch welche die durch die Durchlassöffnung zurückgeführte Flüssigkeit in die Luftabscheidekammer gelangen kann.

Vorzugweise kann die Anlagefläche durch einen Ansatz gebildet sein, der sich in Richtung der Luftabscheidekammer erstreckt. Der Ansatz kann dabei einstückig mit dem Einsatz ausgebildet sein und bewirkt, dass die Leitwand der Saugscheibe nicht zu weit in die Entlüftungskammer hinein ragen muss. Damit wird sichergestellt, dass die Saugscheibe in das Pumpengehäuse ohne Probleme eingesetzt werden kann.

Erfindungsgemäß ist für die Bewerkstelligung der Luftabscheidung innerhalb der Luftabscheidekammer eine Saugscheibe vorgesehen, die zur Trennung der Luftabscheidekammer von der Pumpenkammer in die Luftabscheidekammer eingesetzt werden kann, wobei die Saugscheibe eine zentrale Saugöffnung und Flüssigkeitsführungselemente aufweist, die die im Betrieb der Pumpe durch den Kanal und die Einlassöffnung der Luftabscheidekammer gesaugte Flüssigkeit zur Saugöffnung hin umlenken. Erfindungsgemäß umfassen die Flüssigkeitsführungselemente die genannte Leitwand, mit der die Saugscheibe im eingesetzten Zustand formschlüssig an der Unterseite des in die Entlüftungskammer eingesetzten Einsatzes derart angelegt werden kann, dass der Kanal durch die Leitwand und die Unterseite des Einsatzes nach oben begrenzt ist.

Erfindungsgemäß wird weiterhin ein Verfahren zur Herstellung eines Pumpengehäuses der beschriebenen Art mittels eines Spritzpressverfahrens vorgeschlagen, bei dem zur Ausbildung des Kanals ein erster Kern verwendet wird, der form- oder stoffschlüssig mit einem zweiten Kern verbunden ist, welcher zur Ausbildung der Entlüftungskammer dient, wobei die Kerne mit einer Formmasse umspritzt oder umgossen werden und anschließend aus dem derart entstandenen Formteil durch die Öffnung der Entlüftungskammer herausgezogen werden. Dieser Herstellungsprozess ermöglicht es, auf einen separaten Kern zur Ausbildung des Kanals zu verzichten, der durch eine zusätzliche Öffnung im Pumpengehäuse entformt werden muss. Entsprechend entfällt auch die Notwendigkeit eines Stöpsels zum dichtenden Verschluss der ehemals notwendigen Entformungsöffnung.

Zur Herstellung eines Pumpengehäuses für den Betrieb mit einer elektromotorisch betriebenen Pumpe sind weiterhin die beiden Schritte vorzunehmen, dass durch die Öffnung der Entlüftungskammer ein Einsatz der vorbeschriebenen Art in diese eingesetzt wird, sowie eine Saugscheibe der vorbeschriebenen Art in die Luftabscheidekammer eingesetzt wird. Sodann kann das so gebildete Pumpengehäuse an einen Elektromotor angeflanscht werden, auf dessen Welle sich ein Laufrad befindet, dass sich im Betrieb in der Pumpenkammer dreht, wobei dadurch die zu fördernde Flüssigkeit durch den Kanal, die Einlassöffnung, die Luftabscheidekammer und die Saugöffnung der Saugscheibe gesaugt wird.

Weitere Vorteile und Merkmale der Erfindung sind in der nachfolgenden Beschreibung von Ausführungsbeispielen, die in den Figuren dargestellt sind, beschrieben.

Es zeigen:
- Figur 1:: Pumpengehäuse nach dem Stand der Technik
- Figur 2:: Pumpengehäuse nach Figur 1 in perspektivischer Ansicht mit Schnitt durch die Entlüftungskammer und den Kanal
- Figur 3:: Seitenansicht des Pumpengehäuses mit Entlüftungskammer
- Figur 4a:: Schnittdarstellung des Pumpengehäuses gemäß Schnittlinie I-I nach Figur 3
- Figur 4b:: Perspektivische Ansicht des erfindungsgemäßen Pumpengehäuses mit Schnitt durch die Entlüftungskammer und den Kanal
- Figur 5:: Perspektivische Ansicht des Einsatzes von Schrägunten
- Figur 6:: Einsatz 15 in Draufsicht
- Figur 7:: Perspektivische Ansicht des Einsatzes von schräg oben
- Figur 8:: Perspektivische Ansicht der Saugscheibe 14

Figuren 1 und 2 zeigen Pumpengehäuse 1 nach dem Stand der Technik. Dabei ist in Figur 1 ein Pumpengehäuse für eine elektromotorisch betriebene Pumpe dargestellt, die eine Luftabscheidekammer 2 aufweist, in die durch eine Einlassöffnung 4 eine im Betrieb geförderte Flüssigkeit eintritt. Der Flüssigkeitsstrom ist mit Pfeilen A gekennzeichnet. Die geförderte Flüssigkeit tritt dabei zunächst durch eine Einlassöffnung eines Rohransatzes unterhalb der Luftabscheidekammer in das Pumpengehäuse ein und wird zu einem Dreiwegeventil 25 geführt. Von dem Dreiwegeventil 25 kann die Flüssigkeit zu der Luftabscheidekammer 2 geführt werden, wobei sie durch den Kanal 5 und durch die Einlassöffnung 4 in diese eintritt.

Seitlich an die Luftabscheidekammer schließt sich eine zylindrische, vertikal angeordnete Entlüftungskammer 3 an, die mit der Luftabscheidekammer 2 sowohl konstruktiv über ihre Kammerwandung als auch kommunizierend über ihre Höhlung in Verbindung steht. Die äußere Gehäusewandung der Entlüftungskammer (3) geht in die Pumpenkammerwand über. Die Entlüftungskammer 3 ist baulich von dem Kanal 5 und der Einlassöffnung 4 getrennt.

In Figur 2 ist dargstellt, dass zur Ausbildung des Kanals 5 ein Kern notwendig ist, der nach der Herstellung des Pumpengehäuses 1 mittels eines Spritzgieß- oder Spritzpressverfahrens in Richtung des Pfeils C entformt werden muss. Die notwendige Entformung des Kerns hat zur Folge, dass das Pumpengehäuse 1 in dem mit B gekennzeichneten Bereich nach außen hin offen bleibt, so dass der Kanal 5 nach unten nicht durch eine Gehäusewand begrenzt ist. Dies bedingt die Verwendung eines Stöpsels, der dichtend auf die durch die Entformung zurückbleibende Öffnung gesetzt werden muss.

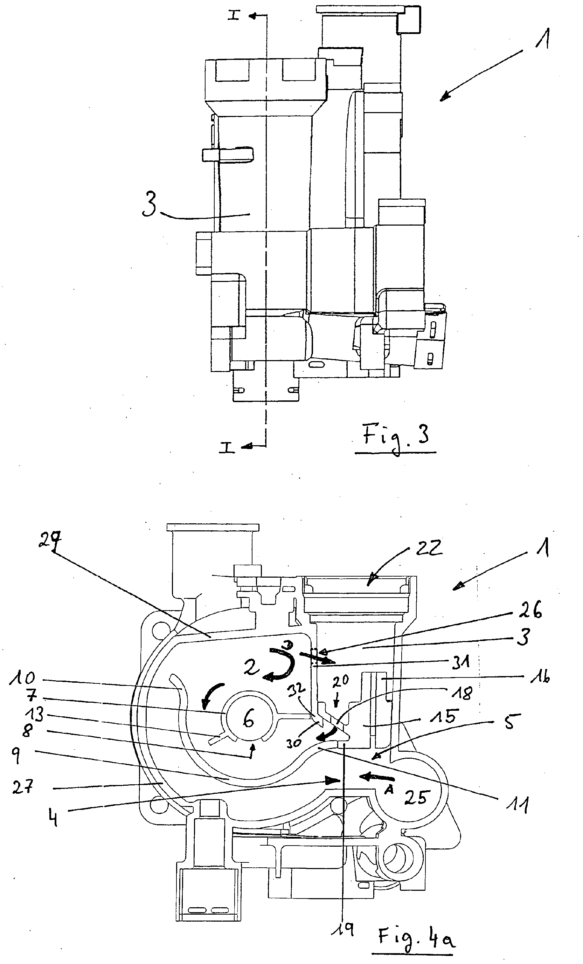

Figur 3 zeigt ein erfindungsgemäßes Pumpengehäuse 1 von einer Seitenansicht auf die Entlüftungskammer 3. Im montierten Zustand würde sich an das in Figur 3 gezeigte Pumpengehäuse 1 rechtsseits ein nicht dargestellter Elektromotor anschließen.

Figur 4a zeigt einen Querschnitt durch das Pumpengehäuse gemäß Schnittlinie I-I nach Figur 3. Die Entlüftungskammer 3 ist in Richtung der Laufradachse der Pumpe gesehen neben der Luftabscheidekammer 2 angeordnet. Eine Kammerwand 31 bildet eine Trennwand zwischen der Entlüftungskammer 3 und der Luftabscheidekammer 2. Die Trennwand 31 erstreckt sich senkrecht nach unten und endet mit ihrem unteren Ende 32 etwa auf der Höhe der vertikalen Mitte der Luftabscheidekammer 2. An ihrem oberen Ende geht die Trennwand 31 einstückig in eine obere Pumpenkammerwand 29 über, welche zusammen mit der Pumpenkammerwand 27 die Luftabscheidekammer 2 in radialer Richtung begrenzt bzw. die Luftabscheidekammer 2 bildet.

Die Entlüftungskammer 3 ist zylindrisch und nach unten offen ausgebildet, so dass der die Entlüftungskammer 3 bildende Hohlraum in den den Kanal 5 bildenden Raum übergeht. Zur Begrenzung der Entlüftungskammer 3 nach unten bzw. zur Begrenzung des Kanals 5 nach oben kann durch eine an dem oberseitigen Ende der Entlüftungskammer 3 vorgesehene Öffnung 2 ein Einsatz 15 in die Entlüftungskammer 3 eingesetzt bzw. eingeschoben werden. Der Einsatz 15 weist einen äußeren Umfang auf, der im Wesentlichen dem inneren Umfang der Entlüftungskammer 3 entspricht, so dass der Einsatz 15 formschlüssig in der Entlüftungskammer 3 einliegt. Der Einsatz 15 bildet einen Boden der Entlüftungskammer 3 sowie mit seiner Unterseite eine obere Begrenzung des Kanals 5.

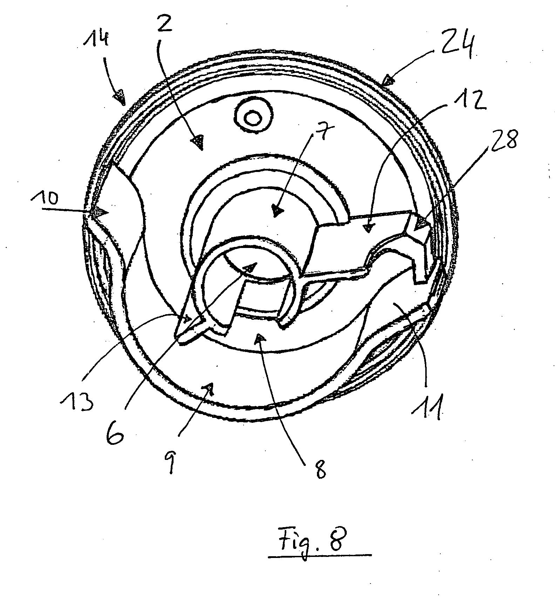

An die Unterseite des Einsatzes 15 schließt sich eine Leitwand 11 an, die ein Teil von Flüssigkeitsführungselementen einer Saugscheibe 14 ist, siehe Figur 8. Die zum Kanal 5 gerichtete Fläche der Leitwand 11 und der Boden des Kanals 5 bilden eine Einlassöffnung 4 zur Luftabscheidekammer 2.

Die Trennwand 31 weist an ihrem unteren Ende 32 einen Vorsprung 30 auf, der sich in die Entlüftungskammer 3 hinein erstreckt. Im eingesetzten Zustand des Einsatzes 15 stützt sich dieser gegen den Vorsprung 30 ab.

Im Betrieb der Pumpe wird Flüssigkeit von einem Dreiwegeventil in Richtung des Pfeils A durch den Kanal 5 und die Einlassöffnung 4 in die Luftabscheidekammer 2 gesaugt. Flüssigkeitsführungselemente 9, 10, 11 lenken die Flüssigkeit entlang des Umfangs der Luftabscheidekammer 2, so dass sich eine Teilzirkulare Strömung von der Einlassöffnung 4 zu dem oberen Bereich der Luftabscheidekammer 2 ausbildet. Die Flüssigkeitsführungselemente 9, 10, 11 sind bogenförmig ausgebildet. Sie umfassen die erste Leitwand 11, die sich an einen Ansatz 19 des Einsatzes (15) formschlüssig anschließt und die die etwa tangential in die Luftabscheidekammer 2 eintretende Strömung in Richtung des Umfangs der Luftabscheidekammer umlenkt. Weiterhin umfassen die Flüssigkeitsführungselemente eine zweite Leitwand 9, die sich an die erste Leitwand 11 anschließt und sich in einem Winkel von etwa 120° bogenförmig um das Zentrum der Luftabscheidekammer 2 erstreckt. Die Pumpenkammerwand 27 und die zweite Leitwand 9 bilden so einen Kanal, durch den die Flüssigkeit strömt. Schließlich umfassen die Flüssigkeitsführungselemente ein Wandelement 10, was sich an das Flüssigkeitsführungselement 9 anschließt und bogenförmig zur Pumpenkammerwand 27 erstreckt. Dies bewirkt, dass sich der von der Pumpenkammerwand 27 und der zweiten Leitwand 9 gebildete Kanal verjüngt, wobei die Strömung im Bereich des Wandelements 10 beschleunigt wird.
Die Strömung gelangt anschließend in den oberen Teil der Luftabscheidekammer 2. Sie prallt gegen die obere Pumpenkammerwand 29, wird dort abgelenkt und durch die Trennwand 31 umgelenkt. Die Strömungsrichtung ist mit den Buchstaben D in Figur 4a gekennzeichnet.

Im oberen Bereich der Luftabscheidekammer 2 trennt sich die von der Flüssigkeit mitgeförderte Luft von derselben und wird aufgrund der Strömung an der oberen Pumpenkammerwand 29 durch eine Öffnung 26 in der Trennwand 31 in die Entlüftungskammer 3 gedrückt, wo sie durch die Öffnung 22 am oberen Ende der Entlüftungskammer 3 an die Umgebung abgegeben wird. Die Flüssigkeit strömt weiterhin zu einer Saugöffnung 6, die von einer zylindrischen Einfassung 7 zumindest teilweise umschlossen ist. Von der Einfassung 7 erstreckt sich eine Begrenzungswand 12 radial in Richtung der Trennwand 31, die mit einer Anlagefläche 28 formschlüssig an der Trennwand 31 anliegt. Durch diese Begrenzungswand wird dafür gesorgt, dass die Strömung vor der Trennwand 31 um ca. 180° umgelenkt wird. Die umgelenkte Strömung trifft dadurch zum Teil auf die Rückseite des Wandelementes 10 sowie auf die in Umfangsrichtung fließende Strömung, wird von dieser abgelenkt und strömt die zu der Saugöffnung 6 gerichtete Fläche der zweiten Leitwand 9 an, die der zylindrischen Einfassung 7 gegenüber liegt und zusammen mit dieser einen weiteren Führungskanal für die Flüssigkeit bildet.

Eine sich von der Einfassung 7 radial zu der zweiten Leitwand 9 erstreckende Wand 13 verengt diesen Kanal, so dass die Strömung an dieser Stelle beschleunigt wird. Die Einfassung 7 weist weiterhin eine nach unten gerichtete Öffnung 8 auf, durch die die Flüssigkeit in die Saugöffnung 6 und damit in den Saugmund des Laufrades der Pumpe eintritt. Zwischen der Begrenzungswand 12 und der ersten respektive der zweiten Leitwand 11, 9 ist ein Strömungsberuhigter Bereich gebildet, in dem durch den Sog in Richtung der Saugöffnung 6 ein leichter Unterdruck herrscht. Zwischen der ersten Leitwand 11 und dem unteren Ende 32 der Trennwand 31 ist eine Öffnung gebildet, durch die sich in der Entlüftungskammer 3 sammelnde Flüssigkeit in die Luftabscheidekammer 2 zurückgeführt wird.

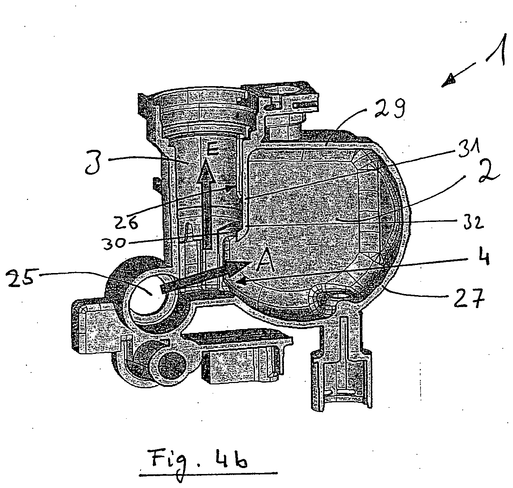

Figur 4b zeigt eine perspektivische Ansicht des Pumpengehäuses ohne Einsatz 15 und Saugscheibe 14 in einer Schnittdarstellung durch die Entlüftungskammer 3 und den Kanal 5.

Die Strömungsrichtung der Flüssigkeit von dem Dreiwegeventil 25 durch den Kanal 5 und durch die Einlassöffnung 4 in die Luftabscheidekammer 2 ist durch den Pfeil A dargestellt. Der Pfeil E zeigt die Entformungsrichtung für die Anwendung des erfindungsgemäßen Verfahrens an, bei dem der zur Ausbildung des Kanals 5 respektive der Entlüftungskammer 3 notwendige Kern bzw. notwendigen Kerne aus dem spritzgegossenen oder spritzgepressten Formteil entformt werden muss bzw. müssen.

Figur 4b zeigt eine Öffnung 26 in der Trennwand 31 in Gestalt eine Langlochs, durch welches die sich im oberen Bereich der Luftabscheidekammer 2 sammelnde Luft durch die Umfangsströmung in die Entlüftungskammer 3 eingebracht wird. Die Trennwand 31 erstreckt sich senkrecht in die Luftabscheidekammer 2 hinein, wobei sie etwa auf der mittleren Höhe der Luftabscheidekammer 2 mit ihrem Ende 32 endet. An das Ende 32 ist ein nach innen in die Entlüftungskammer 3 gerichteter Vorsprung 30 angeformt, der zum einen eine Anlagefläche für den Einsatz 15 bildet, zum anderen für eine Verstärkung der Trennwand 31 sorgt, da er sich zumindest teilweise entlang des Innenumfangs der Entlüftungskammer 3 erstreckt.

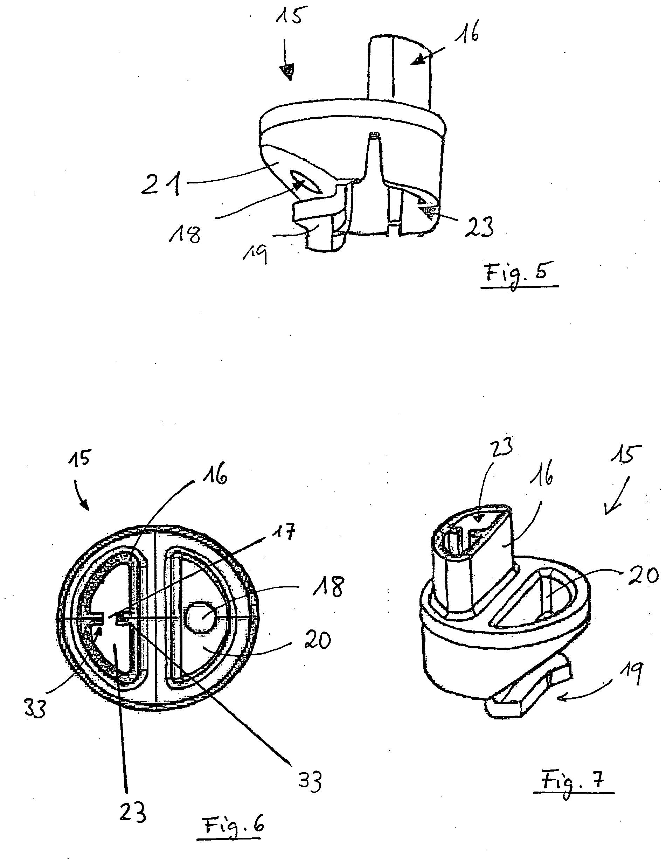

Die Figuren 5 bis 7 zeigen den Einsatz 15, der durch die Öffnung 22 der Entlüftungskammer 3 in diese eingesetzt werden kann. Der Einsatz 15 besteht aus einem im Wesentlichen zylindrischen Grundelement, welches in seinem Außenumfang den Innenumfang der Entlüftungskammer 3 angepasst ist. Sämtliche Kanten des Einsatzes 15 sind gefast, um ein Verkanten und Verletzen beim Einsetzen zu verhindern. Der Einsatz weist eine im Querschnitt halbzylindrische Öffnung 23 auf, die sich entlang der gesamten vertikalen Länge des Einsatzes 15 erstreckt. Von der Oberseite des Grundelementes erhebt sich eine Begrenzungswand 16, die die Öffnung 23 umfänglich vollständig umschließt und nach oben verlängert. Innenseitig der Begrenzungswand 16 sind zwei sich gegenüberliegende Vorsprünge 33 angeordnet, die sich senkrecht entlang der gesamten vertikalen Länge der Öffnung 23 erstrecken. Die beiden Vorsprünge 33 sind in einem Abstand 17 voneinander beabstandet, um Blasen durch die Öffnung 23 nach oben zu führen.

Das Grundelement weist weiterhin auf der der Öffnung 23 gegenüberliegenden Halbzylinderseite eine Ausnehmung 20 auf, in der sich durch die Öffnung 26 in der Trennwand 31 oder durch die Öffnung 23 des Einsatzes 15 in die Entlüftungskammer 3 eintretende Flüssigkeit sammeln kann. Die Ausnehmung 20 ist ebenfalls im Querschnitt halbzylindrisch ausgebildet und weist in ihrem Boden eine Durchlassöffnung 18 auf, durch die die in der Vertiefung 20 sich ansammelnde Flüssigkeit in den strömungberuhigten Bereich der Luftabscheidekammer 2 zwischen der Begrenzungswand 12 und der Leitwand 11 zurückgeführt wird. Das Grundelement weist eine Abschrägung 21 auf, mit der sich der Einsatz 15 gegen den Vorsprung 30 der Trennwand 31 im eingesetzten Zustand abstützt. Die Abschrägung erstreckt sich über denjenigen halbzylindrischen Teil des Grundelementes, in dem die Ausnehmung 20 ausgebildet ist, so dass die Vertiefung 20 in demjenigen halbzylindrischen Teil des Einsatzes 15 ausgebildet ist, der zur Luftabscheidekammer 2 gerichtet ist, wohingegen die Öffnung 23 und die Begrenzungswand 16 in dem halbzylindrischen Teil des Einsatzes 15 ausgebildet sind, der von der Luftabscheidekammer 2 weg gerichtet ist.

Auf der Unterseite des Grundelements ist zwischen der Öffnung 23 und der Durchlassöffnung 18 eine Anlagefläche ausgebildet, die durch einen sich in Richtung der Luftabscheidekammer 2 erstreckenden Ansatz 19 gebildet ist. An diesen Ansatz 19 kann die Leitwand 11 der Saugscheibe 14 formschlüssig angelegt werden, so dass Leitwand 11 und Ansatz 19 einen Teil der oberen Begrenzung des Kanals 5 zur Entlüftungskammer 3 hin bildet.

In Figur 8 ist die Saugscheibe 14 dargestellt, die in das Pumpengehäuse 1 zur Trennung der Luftabscheidekammer 2 von der Pumpenkammer eingesetzt werden kann. Die Saugscheibe 14 umfasst die erste Leitwand 11, die zweite Leitwand 9 sowie das Wandelement 10, die zusammen die Flüssigkeitsführungselemente bilden. Weiterhin weist die Saugscheibe eine zentrale Öffnung 6 auf, die auf den Saugmund eines der Pumpenkammer angeordneten Laufrades gerichtet ist. Die Saugöffnung 6 ist zumindest teilweise von einer zylindrischen Einfassung 7 umgeben. Die Einfassung 7 weist eine Öffnung 8 auf, die der zur Saugöffnung 6 gerichteten Innenfläche der zweiten Leitwand 9 zugewandt ist. Durch die Öffnung 8 tritt die angesaugte Flüssigkeit in die Saugöffnung 6 und damit in den Saugmund des Laufrades ein. In Strömungsrichtung vor der Öffnung 8 ist eine Wand 13 angeordnet, die sich radial von der Saugöffnung 6 weg erstreckt. Sie bildet eine Verengung des zwischen der Einfassung 7 und der zweiten Leitwand 9 gebildeten Strömungskanals, so dass die Flüssigkeit an dieser Stelle beschleunigt wird. In horizontaler Ebene erstreckt sich von der Einfassung 7 weiterhin eine Begrenzungswand 12 radial zur Trennwand 31 hin, die an dieser formschlüssig anliegt. Die Begrenzungswand 12 weist hierzu einen zur ersten Leitwand 11 gerichteten Ansatz auf, der mit einer Abflachung 28 versehen ist, mit welcher die Begrenzungswand 12 im eingesetzten Zustand der Saugscheibe 14 an dem unteren Ende 32 der Trennwand 31 formschlüssig anliegt. Die Flüssigkeitsführungselemente 9, 10, 11, die Einfassung 7 sowie die Begrenzungswand 12 und die Wand 13 erstrecken sich in Richtung der Laufradachse von der Saugscheibe 14 weg und sind einstückig mit dieser ausgebildet.

Die Saugscheibe 14 gemäß Figur 8 ist in ihren in das Pumpengehäuse 1 eingesetzten Zustand in Figur 4a dargestellt. Das Pumpengehäuse 1 mit eingesetzter Saugscheibe 14 und eingesetztem Einsatz 15 ermöglicht eine effektive Abscheidung von in der geförderten Flüssigkeit enthalten Luft unter Vermeidung einer zusätzlichen Öffnung im Pumpengehäuse 1 durch die Ausbildung des Kanals 5. Das Pumpengehäuse 1 kann einfacher hergestellt werden und verhindert die Gefahr einer Leckage, weil nunmehr kein Stöpsel mehr verwendet werden muss, der die Entformungsöffnung zur Ausbildung des Kanals 5 verschließen muss.

Es folgt eine Bezugszeichenliste:
- 1: Pumpengehäuse
- 2: Luftabscheidekammer
- 3: Entlüftungskammer
- 4: Einlassöffnung
- 5: Kanal
- 6: Saugöffnung
- 7: Einfassung
- 8: Öffnung
- 9: Flüssigkeitsführungselement, zweite Leitwand
- 10: Flüssigkeitsführungselement, Wandelement
- 11: Flüssigkeitsführungselement, erste Leitwand
- 12: Begrenzungswand
- 13: Wand
- 14: Saugscheibe
- 15: Einsatz
- 16: Begrenzungswand
- 17: Spalt
- 18: Durchlassöffnung
- 19: Ansatz
- 20: Ausnehmung/ Vertiefung
- 21: Abschrägung
- 22: Öffnung der Entlüftungskammer
- 23: Öffnung
- 24: Rand der Trennscheibe
- 25: 3-Wege- Ventil
- 26: Durchlass/ Öffnung
- 27: Pumpenkammerwand
- 28: Anlagefläche
- 29: obere Pumpenkammerwand
- 30: Vorsprung
- 31: Trennwand, Kammerwand
- 32: Ende der Trennwand 31

## Patentansprüche

1. Pumpengehäuse (1) für eine elektromotorisch betriebene Pumpe, mit einem Kanal (5) und mit einer Luftabscheidekammer (2), durch welche im Betrieb der Pumpe eine zu fördernde Flüssigkeit gesaugt und in welcher in der Flüssigkeit enthaltene Luft abgeschieden wird, wobei die Luftabscheidekammer (2) eine Einlassöffnung (4) aufweist, an die sich der Kanal (5) anschließt, durch den die Flüssigkeit im Betrieb der Pumpe in die Luftabscheidekammer (2) gesaugt wird, und mit einer Entlüftungskammer (3), die mit der Luftabscheidekammer (2) zum Einbringen der abgeschiedenen Luft in die Entlüftungskammer (3) in Verbindung steht, wobei sich die Entlüftungskammer (3) seitlich an die Luftabscheidekammer (2) anschließt, und wobei die Entlüftungskammer (3) an einem oberseitigen Ende eine Öffnung (22) zur Abgabe der Luft nach außen aufweist, und an einem unterseitigen Ende zu dem Kanal (5) hin offen ausgebildet ist, **dadurch gekennzeichnet, dass** durch die Öffnung (22) ein Einsatz (15) in die Entlüftungskammer (3) derart eingebracht ist, dass der Einsatz (15) im eingesetzten Zustand einen Boden der Entlüftungskammer (3) bildet, der die Entlüftungskammer (3) zum Kanal (5) hin abgrenzt, wobei der Einsatz (15) zumindest eine Öffnung (23) aufweist, über die die Entlüftungskammer (3) mit dem Kanal (5) in Verbindung steht.

2. Pumpengehäuse (1) nach Anspruch 1, **dadurch gekennzeichnet, dass** die Entlüftungskammer (3) von einer Kammerwand (31) begrenzt ist, die zumindest einen nach innen gerichteten Vorsprung (30) aufweist, gegen welchen sich der Einsatz (15) im eingesetzten Zustand abstützt.

3. Pumpengehäuse (1) nach Anspruch 1 oder 2, **dadurch gekennzeichnet, dass** die Entlüftungskammer (3) von einer Kammerwand (31) begrenzt ist, die eine Trennwand (31) bildet, die die Entlüftungskammer (3) von der Luftabscheidekammer (2) trennt, wobei die Trennwand (31) ein unteres Ende (32) aufweist, mit dem sie oberhalb der Einlassöffnung (4) endet.

4. Pumpengehäuse (1) nach einem der vorherigen Ansprüche, **dadurch gekennzeichnet, dass** die Öffnung (23) des Einsatzes (15) im Querschnitt halbzylindrisch ausgebildet ist.

5. Pumpengehäuse (1) nach einem der vorherigen Ansprüche, **dadurch gekennzeichnet, dass** sich innenseitig der Öffnung (23) des Einsatzes (15) zumindest ein Vorsprung (33) über zumindest einen Teil der vertikalen Erstreckung der Öffnung (23) des Einsatzes (15) zu deren Mitte hin erstreckt.

6. Pumpengehäuse (1) nach Anspruch 5, **dadurch gekennzeichnet, dass** dem Vorsprung (33) ein weiterer Vorsprung (33) beabstandet gegenübersteht.

7. Pumpengehäuse (1) nach einem der vorherigen Ansprüche, **dadurch gekennzeichnet, dass** eine sich in Richtung der Öffnung (22) der Entlüftungskammer (3) erstreckende Begrenzungswand (16) einen offenen Raum umschließt, der die Öffnung (23) des Einsatzes (15) in Richtung der Öffnung (22) der Entlüftungskammer (3) verlängert.

8. Pumpengehäuse (1) nach einem der vorherigen Ansprüche, **gekennzeichnet durch** eine Durchflussöffnung (18), über die die Entlüftungskammer (3) mit der Luftabscheidekammer (2) im eingesetzten Zustand des Einsatzes (15) verbunden ist.

9. Pumpengehäuse (1) nach Anspruch 8, **gekennzeichnet durch** eine sich nach unten erstreckende Vertiefung (20), wobei die Durchflussöffnung (18) bodenseitig der Vertiefung (20) angeordnet ist.

10. Pumpengehäuse (1) nach einem der vorherigen Ansprüche 8 oder 9, **dadurch gekennzeichnet, dass** an seiner Unterseite zwischen der Durchflussöffnung (18) und der Öffnung (23) eine Anlagefläche (19) gebildet ist, an die eine Leitwand (11) einer Saugscheibe (14) formschlüssig ansetzbar ist.

11. Pumpengehäuse (1) nach Anspruch 10, **dadurch gekennzeichnet, dass** die Anlagefläche durch einen Ansatz (19) gebildet ist, der sich in Richtung der Luftabscheidekammer (2) erstreckt.

12. Pumpengehäuse (1) nach einem der vorherigen Ansprüche, **gekennzeichnet durch** eine Saugscheibe (14), die zur Trennung der Luftabscheidekammer (2) von einer axial vor der Luftabscheidekammer (2) angeordneten Pumpenkammer, in der ein Laufrad angeordnet werden kann, in die Luftabscheidekammer (2) eingesetzt ist, wobei die Saugscheibe (14) eine zentrale Saugöffnung (6) und Flüssigkeitsführungselemente (9, 10, 11) aufweist, die die im Betrieb der Pumpe **durch** den Kanal (5) und die Einlassöffnung (4) der Luftabscheidekammer (2) gesaugte Flüssigkeit zur Saugöffnung (6) umlenken, und wobei die Flüssigkeitsführungselemente (9, 10, 11) eine Leitwand (11) umfassen, mit der die Saugscheibe (14) im eingesetzten Zustand formschlüssig an der Unterseite des in die Entlüftungskammer (3) eingesetzten Einsatzes (15) derart angelegt ist, dass der Kanal (5) **durch** die Leitwand (11) und die Unterseite des Einsatzes (15) nach oben begrenzt ist.

13. Verfahren zur Herstellung eines Pumpengehäuses (1) nach einem der Ansprüche 1 bis 11 durch ein Spritzguss- oder Spritzpressverfahren, **dadurch gekennzeichnet, dass** zur Ausbildung des Kanals (5) ein erster Kern verwendet wird, der form- oder stoffschlüssig mit einem zweiten Kern zur Ausbildung der Entlüftungskammer (3) verbunden ist, wobei die Kerne zur Ausbildung des Pumpengehäuses (1) mit einer Formmasse umspritzt oder umgossen werden und die Kerne anschließend durch die Öffnung (22) der gebildeten Entlüftungskammer (3) entfernt werden.

14. Verfahren nach Anspruch 13, **dadurch gekennzeichnet, dass** durch die Öffnung (22) ein Einsatz (15) nach einem der Ansprüche 1 bis 11 in die Entlüftungskammer (3) und eine Saugscheibe (14) nach Anspruch 12 in die Luftabscheidekammer (2) eingesetzt wird.

## Claims

1. Pump casing (1) for a pump which is operated by an electric motor, having a channel (5) and having an air separator chamber (2), through which a liquid to be transported is sucked during operation of the pump and in which air which is contained in the liquid is separated, the air separator chamber (2) having an inlet opening (4) which is adjoined by the channel (5), through which the liquid is sucked into the air separator chamber (2) during operation of the pump, and having a ventilation chamber (3) which is connected to the air separator chamber (2) for introducing the separated air into the ventilation chamber (3), the ventilation chamber (3) adjoining the air separator chamber (2) laterally, and the ventilation chamber (3) having, at an upper-side end, an opening (22) for discharging the air to the outside, and being of open configuration towards the channel (5) at a lower-side end, **characterized in that** an insert (15) is introduced through the opening (22) into the ventilation chamber (3) in such a way that, in the inserted state, the insert (15) forms a bottom of the ventilation chamber (3), which bottom delimits the ventilation chamber (3) towards the channel (5), the insert (15) having at least one opening (23), via which the ventilation chamber (3) is connected to the channel (5).

2. Pump casing (1) according to Claim 1, **characterized in that** the ventilation chamber (3) is delimited by a chamber wall (31) which has at least one inwardly directed projection (30), against which the insert (15) is supported in the inserted state.

3. Pump casing (1) according to Claim 1 or 2, **characterized in that** the ventilation chamber (3) is delimited by a chamber wall (31) which forms a dividing wall (31) which separates the ventilation chamber (3) from the air separator chamber (2), the dividing wall (31) having a lower end (32), with which it ends above the inlet opening (4).

4. Pump casing (1) according to one of the preceding claims, **characterized in that** the opening (23) of the insert (15) is of semi-cylindrical configuration in cross section.

5. Pump casing (1) according to one of the preceding claims, **characterized in that**, on the inner side of the opening (23) of the insert (15), at least one projection (33) extends over at least part of the vertical extent of the opening (23) of the insert (15) towards its centre.

6. Pump casing (1) according to Claim 5, **characterized in that** a further projection (33) lies opposite and spaced apart from the projection (33).

7. Pump casing (1) according to one of the preceding claims, **characterized in that** a boundary wall (16) which extends in the direction of the opening (22) of the ventilation chamber (3) encloses an open space which extends the opening (23) of the insert (15) in the direction of the opening (22) of the ventilation chamber (3).

8. Pump casing (1) according to one of the preceding claims, **characterized by** a throughflow opening (18), via which the ventilation chamber (3) is connected to the air separator chamber (2) in the inserted state of the insert (15).

9. Pump casing (1) according to Claim 8, **characterized by** a downwardly extending depression (20), the throughflow opening (18) being arranged on the bottom side of the depression (20).

10. Pump casing (1) according to either of the preceding Claims 8 and 9, **characterized in that**, on its underside, a bearing face (19) is formed between the throughflow opening (18) and the opening (23), onto which bearing face (19) a guide wall (11) of a suction disc (14) can be set in a positively locking manner.

11. Pump casing (1) according to Claim 10, **characterized in that** the bearing face is formed by way of an attachment (19) which extends in the direction of the air separator chamber (2).

12. Pump casing (1) according to one of the preceding claims, **characterized by** a suction disc (14) which is inserted into the air separator chamber (2) in order to separate the air separator chamber (2) from a pump chamber which is arranged axially upstream of the air separator chamber (2) and in which an impeller can be arranged, the suction disc (14) having a central suction opening (6) and liquid guiding elements (9, 10, 11) which deflect the liquid which is sucked through the channel (5) and the inlet opening (4) of the air separator chamber (2) during operation of the pump to the suction opening (6), and the liquid guiding elements (9, 10, 11) comprising a guide wall (11), by way of which, in the inserted state, the suction disc (14) is set in a positively locking manner against the underside of the insert (15) which is inserted into the ventilation chamber (3), in such a way that the channel (5) is delimited upwards by way of the guide wall (11) and the underside of the insert (15).

13. Method for producing a pump casing (1) according to one of Claims 1 to 11 by way of an injection moulding or transfer moulding method, **characterized in that** a first core is used to configure the channel (5), which first core is connected in a positively locking or integrally joined manner to a second core for configuring the ventilation chamber (3), the cores being encapsulated or cast by the moulding material in order to configure the pump casing (1), and the cores subsequently being removed through the opening (22) of the ventilation chamber (3) which is formed.

14. Method according to Claim 13, **characterized in that** an insert (15) according to one of Claims 1 to 11 is inserted into the ventilation chamber (3) and a suction disc (14) according to Claim 12 is inserted into the air separator chamber (2) through the opening (22).

## Revendications

1. Boîtier de pompe (1) pour une pompe entraînée par un moteur électrique, comprenant un canal (5) et une chambre de séparation d'air (2) à travers laquelle un liquide à refouler est aspiré pendant le fonctionnement de la pompe et dans laquelle de l'air contenu dans le liquide est séparé, la chambre de séparation d'air (2) présentant une ouverture d'entrée (4) à laquelle se raccorde le canal (5), à travers lequel le liquide est aspiré dans la chambre de séparation d'air (2) pendant le fonctionnement de la pompe, et comprenant une chambre de désaérage (3) qui est en liaison avec la chambre de séparation d'air (2) pour introduire l'air séparé dans la chambre de désaérage (3), la chambre de désaérage (3) se raccordant latéralement à la chambre de séparation d'air (2), et la chambre de désaérage (3) présentant, au niveau d'une extrémité supérieure, une ouverture (22) pour délivrer l'air vers l'extérieur, et étant réalisée au niveau d'une extrémité inférieure de manière ouverte vers le canal (5), **caractérisé en ce qu'**un insert (15) est introduit dans la chambre de désaérage (3) à travers l'ouverture (22) de telle sorte que l'insert (15) forme dans l'état inséré un fond pour la chambre de désaérage (3) qui délimite la chambre de désaérage (3) vers le canal (5), l'insert (15) présentant au moins une ouverture (23) par le biais de laquelle la chambre de désaérage (3) est en liaison avec le canal (5).

2. Boîtier de pompe (1) selon la revendication 1, **caractérisé en ce que** la chambre de désaérage (3) est limitée par une paroi de chambre (31) qui présente au moins une saillie (30) orientée vers l'intérieur contre laquelle s'appuie l'insert (15) dans l'état inséré.

3. Boîtier de pompe (1) selon la revendication 1 ou 2, **caractérisé en ce que** la chambre de désaérage (3) est limitée par une paroi de chambre (31) qui forme une paroi de séparation (31) qui sépare la chambre de désaérage (3) de la chambre de séparation d'air (2), la paroi de séparation (31) présentant une extrémité inférieure (32) avec laquelle elle se termine au-dessus de l'ouverture d'entrée (4).

4. Boîtier de pompe (1) selon l'une quelconque des revendications précédentes, **caractérisé en ce que** l'ouverture (23) de l'insert (15) est réalisée avec une section transversale de forme semi-cylindrique.

5. Boîtier de pompe (1) selon l'une quelconque des revendications précédentes, **caractérisé en ce qu'**au moins une saillie (33) s'étend du côté intérieur de l'ouverture (23) de l'insert (15) sur au moins une partie de l'étendue verticale de l'ouverture (23) de l'insert (15) vers son centre.

6. Boîtier de pompe (1) selon la revendication 5, **caractérisé en ce qu'**une saillie supplémentaire (33) est opposée à distance de la saillie (33).

7. Boîtier de pompe (1) selon l'une quelconque des revendications précédentes, **caractérisé en ce qu'**une paroi de limitation (16) s'étendant dans la direction de l'ouverture (22) de la chambre de désaérage (3) entoure un espace ouvert qui prolonge l'ouverture (23) de l'insert (15) dans la direction de l'ouverture (22) de la chambre de désaérage (3).

8. Boîtier de pompe (1) selon l'une quelconque des revendications précédentes, **caractérisé par** une ouverture de passage (18) par le biais de laquelle la chambre de désaérage (3) est connectée à la chambre de séparation d'air (2) dans l'état inséré de l'insert (15).

9. Boîtier de pompe (1) selon la revendication 8, **caractérisé par** un renfoncement (20) s'étendant vers le bas, l'ouverture de passage (18) étant disposée du côté du fond du renfoncement (20).

10. Boîtier de pompe (1) selon l'une quelconque des revendications précédentes 8 ou 9, **caractérisé en ce qu'**au niveau de son côté inférieur entre l'ouverture de passage (18) et l'ouverture (23), est formée une surface d'appui (19) au niveau de laquelle une paroi de guidage (11) d'un disque d'aspiration (14) peut être appliquée par engagement par correspondance de formes.

11. Boîtier de pompe (1) selon la revendication 10, **caractérisé en ce que** la surface d'appui est formée par une pièce rapportée (19) qui s'étend dans la direction de la chambre de séparation d'air (2).

12. Boîtier de pompe (1) selon l'une quelconque des revendications précédentes, **caractérisé par** un disque d'aspiration (14) qui est inséré dans la chambre de séparation d'air (2) pour séparer la chambre de séparation d'air (2) d'une chambre de pompe disposée axialement avant la chambre de séparation d'air (2), dans laquelle peut être disposé un rotor, le disque d'aspiration (14) présentant une ouverture d'aspiration centrale (6) et des éléments de guidage de liquide (9, 10, 11) qui dévient vers l'ouverture d'aspiration (6) le liquide aspiré pendant le fonctionnement de la pompe à travers le canal (5) et l'ouverture d'entrée (4) de la chambre de séparation d'air (2), et les éléments de guidage de liquide (9, 10, 11) comprenant une paroi de guidage (11) avec laquelle le disque d'aspiration (14) est appliqué dans l'état inséré par engagement par correspondance de formes contre le côté inférieur de l'insert (15) inséré dans la chambre de désaérage (3) de telle sorte que le canal (5) soit limité vers le haut par la paroi de guidage (11) et par le côté inférieur de l'insert (15).

13. Procédé de fabrication d'un boîtier de pompe (1) selon l'une quelconque des revendications 1 à 11, par un procédé de moulage par injection ou de pressage par injection, **caractérisé en ce que** pour réaliser le canal (5), un premier noyau est utilisé, lequel est connecté par engagement par correspondance de formes ou par liaison de matière à un deuxième noyau pour réaliser la chambre de désaérage (3), les noyaux étant surmoulés ou enrobés par une masse de moulage pour réaliser le boîtier de pompe (1) et les noyaux étant ensuite enlevés à travers l'ouverture (22) de la chambre de désaérage formée (3).

14. Procédé selon la revendication 13, **caractérisé en ce que** l'insert (15) selon l'une quelconque des revendications 1 à 11 est inséré à travers l'ouverture (22) dans la chambre de désaérage (3) et un disque d'aspiration (14) selon la revendication 12 est inséré dans la chambre de séparation d'air (2).
